# EUROPEAN PATENT APPLICATION

(11) **EP 2 306 730 A2**
(43) Date of publication of application: **06.04.2011**
(21) Application number: 10012862.8
(22) Date of filing: 01.10.2010
(51) Int. Cl.: H04N 7/26, H04N 7/50, H04N 13/00

(54) **Method and system for 3D video decoding using a tier system framework**

(30) Priority: 05.10.2009 US 573746
(71) Applicant: Broadcom Corporation, Irvine, CA 92617-3038 (US)
(72) Inventor: Chen, Xuemin, Rancho Santa Fe, CA 92067 (US); Hulyalkar, Samir, Newtown, PA 18940 (US); Kellerman, Marcus, San Diego, CA 92127 (US); Klebanov, Llya, Thornhill L3T 3C9 (US)
(74) Representative: Jehle, Volker Armin

(57) **Abstract**

A video receiver receives a layered and predicted compressed 3D video comprising a base view video and an enhancement view video. A portion of pictures in the received compressed 3D video are selected to be decoded for display at an intended pace. Pictures in the received compressed 3D video are generated based on a tier system framework with tiers ordered hierarchically according to corresponding decodability. Each picture in the base view and enhancement view videos belongs to one of the plurality of tiers. A picture in a particular tier does not depend directly or indirectly on pictures in a higher tier. Each tier comprises one or more pictures with the same coding order. The video receiver decodes the pictures with the same coding order in parallel, and adaptively decodes the selected pictures according to corresponding coding layer information. The selected pictures are determined based on a particular display rate.

## Description

### FIELD OF THE INVENTION

Certain embodiments of the invention relate to video processing. More specifically, certain embodiments of the invention relate to a method and system for 3D video decoding using a tier system framework.

### BACKGROUND OF THE INVENTION

Digital video capabilities may be incorporated into a wide range of devices such as, for example, digital televisions, digital direct broadcast systems, digital recording devices, and the like. Digital video devices may provide significant improvements over conventional analog video systems in processing and transmitting video sequences with increased bandwidth efficiency.

Video content may be recorded in two-dimensional (2D) format or in three-dimensional (3D) format. In various applications such as, for example, the DVD movies and the digital TV, a 3D video is often desirable because it is often more realistic to viewers than the 2D counterpart. A 3D video comprises a left view video and a right view video. A 3D video frame may be produced by combining left view video components and right view video components, respectively.

Various video encoding standards, for example, MPEG-1, MPEG-2, MPEG-4, H.263, and H.264/AVC, have been established for encoding digital video sequences in a compressed manner. A frame in a compressed video may be coded in three possible modes: I-picture, P-picture, and B-picture. Compressed video frames may be divided into groups of pictures (GOPs). Each GOP comprises one I-picture, several P-pictures and/or several B-pictures for transmission.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A system and/or method is provided for 3D video decoding using a tier system framework, substantially as shown in and/or described in connection with at least one of the figures, as set forth more completely in the claims.

According to an aspect, a method for video coding is provided, the method comprising:
performing by one or more processors and/or circuits in a video processing system:
   selecting one or more pictures from a layered and predicted compressed three-dimensional (3D) video; and
   decoding said selected one or more pictures for display at a particular display rate.
Advantageously, said layered and predicted compressed 3D video comprises a base view video and an enhancement view video, and each of said base view video and said enhancement view video comprises a plurality of layered pictures.
Advantageously, said plurality of layered pictures in said base view video and said enhancement view video are generated based on a tier system framework.
Advantageously, said tier system framework comprises a plurality of tiers that are ordered hierarchically based on corresponding decodability.
Advantageously, each of said plurality of layered picture in said base view video and said enhancement view video are associated with one of said plurality of tiers.
Advantageously, a picture in a particular tier of said plurality of tiers does not depend, whether directly or indirectly, on pictures in a higher tier of said plurality of tiers.
Advantageously, each of said plurality of tiers comprises one or more pictures with same coding order.
Advantageously, the method further comprises decoding said one or more pictures with same coding order in parallel.
Advantageously, the method further comprises adaptively decoding said selected pictures according to corresponding coding layers.
Advantageously, the method further comprises selecting said one or more pictures from said layered prediction compressed three-dimensional (3D) video based on said particular display rate.
According to an aspect, a system for video coding comprises:
one or more processors and/or circuits for use a video processing system, wherein said one or more processors and/or circuits are operable to:
   select one or more pictures from a layered and predicted compressed three-dimensional (3D) video; and
   decode said selected one or more pictures for display at a particular display rate.
Advantageously, said layered and predicted compressed 3D video comprises a base view video and an enhancement view video, and each of said base view video and said enhancement view video comprises a plurality of layered pictures.
Advantageously, said plurality of layered pictures in said base view video and said enhancement view video are generated based on a tier system framework.
Advantageously, said tier system framework comprises a plurality of tiers that are ordered hierarchically based on corresponding decodability.
Advantageously, each of said plurality of layered pictures in said base view video and said enhancement view video are associated with one of said plurality of tiers.
Advantageously, a picture in a particular tier of said plurality of tiers does not depend, whether directly or indirectly, on pictures in a higher tier of said plurality of tiers.
Advantageously, each of said plurality of tiers comprises one or more pictures with same coding order.
Advantageously, said one or more processors and/or circuits are operable to decode said one or more pictures with same coding order in parallel.
Advantageously, said one or more processors and/or circuits are operable to adaptively decode said selected pictures according to corresponding coding layers.
Advantageously, said one or more processors and/or circuits are operable to select said one or more pictures from said layered prediction compressed three-dimensional (3D) video based on said particular display rate.

These and other features and advantages of the present invention may be appreciated from a review of the following detailed description of the present invention, along with the accompanying figures in which like reference numerals refer to like parts throughout.

### BRIEF DESCRIPTION OF SEVERAL VIEWS OF THE DRAWINGS

FIG. 1 is a block diagram of an exemplary video coding system that is operable to perform 3D video coding using a tier system framework and support trick mode operations for a 3D video, in accordance with an embodiment of the invention.

FIG. 2 is a diagram illustrating an exemplary video transmission unit that is operable to encode 3D video based on a tier system framework, in accordance with an embodiment of the invention.

FIG. 3 is a diagram illustrating an exemplary compressed 3D video that is generated based on a tier system framework, in accordance with an embodiment of the invention.

FIG. 4 is a flow chart illustrating exemplary steps that are utilized to compress a 3D video based on a tier system framework, in accordance with an embodiment of the invention.

FIG. 5 is a diagram illustrating an exemplary video reception unit that is operable to utilize an inherent tier system framework of a compressed 3D video to support trick mode operations for a 3D video, in accordance with an embodiment of the invention.

FIG. 6 is a diagram illustrating an independently decodable compressed 3D video that is generated based on a tier system framework to support a 4xFF trick mode, in accordance with an embodiment of the invention.

FIG. 7 is a diagram illustrating a layered compressed 3D video that is generated based on a tier system framework to support 2xFF trick mode, in accordance with an embodiment of the invention.

FIG. 8 is a flow chart illustrating exemplary steps that are utilized to present a 3D video in a trick mode, in accordance with an embodiment of the invention.

### DETAILED DESCRIPTION OF THE INVENTION

Certain embodiments of the invention may be found in a method and/or system for 3D video decoding using a tier system framework. In various embodiments of the invention, a video receiver is operable to receive a compressed 3D video comprising a base view video and an enhancement view video. The compressed 3D video may be layered and predicted. A portion or a subset of pictures of the compressed 3D video may be selected to be decoded for subsequent display at a particular display rate. The compressed 3D video may comprise a base view video and an enhancement view video, each of which comprise a plurality of layered pictures. The plurality of layered pictures in the base view video and the enhancement view video may be generated based on a tier system framework. The tier system framework may comprise a plurality of tiers that are ordered hierarchically based on corresponding coding/decodability. Each picture in the base view video and the enhancement view video may belong to one of the plurality of tiers. A picture in a particular tier of the plurality of tiers does not have to depend, whether directly or indirectly on pictures in a higher tier. Each tier may comprise one or more pictures with the same coding order. The video receiver may be operable to decode the pictures with the same coding order in parallel. The video receiver may also be operable to decode the selected portion of pictures adaptively according to corresponding coding layer information. The pictures and the number of pictures to be selected may be determined based on the intended display rate.

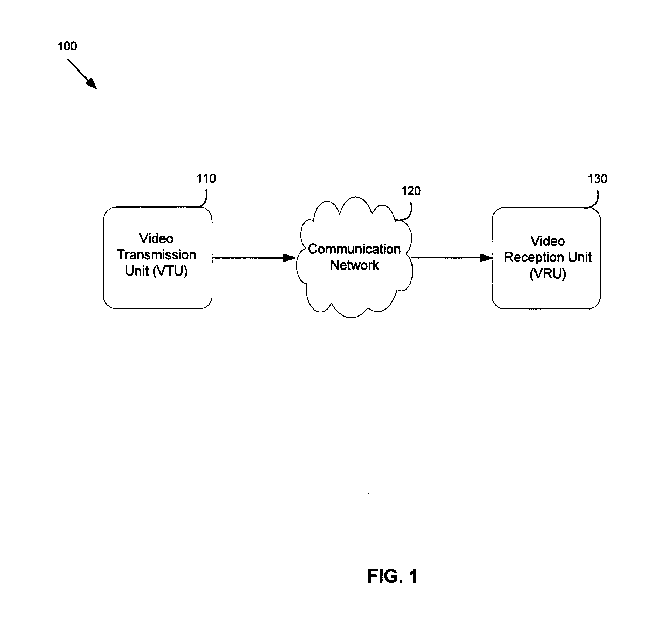

FIG. 1 is a block diagram of an exemplary video coding system that is operable to perform 3D video coding using a tier system framework and support trick mode operations for a 3D video, in accordance with an embodiment of the invention. Referring to FIG. 1, there is shown a video transmission unit (VTU) 110, a communication network 120 and a video reception unit (VRU) 130.

The VTU 110 may comprise suitable logic, circuitry, interfaces and/or code that may be operable to provide compressed video content to the VRU 130. The VTU 110 may be operable to acquire an uncompressed 3D source video, which comprises a left view video and a right view video. The VTU 110 may be operable to compress the acquired 3D source video into two coding view videos, namely, a base view video and an enhancement view video using, for example, MPEG-4 Multi-view Video Coding (MVC) standard. Pictures in the base view video and the enhancement video may be generated from the acquired 3D source video using various approaches such as a layered coding approach. The layered coding approach may be used to generate pictures in several coding layers with an inter-layer picture dependency. For example, the acquired 3D source video may be coded or compressed into base view pictures and enhancement view pictures in several coding layers. The coding layers may comprise, for example, a low coding layer, a middle coding layer and a high coding layer. A higher coding layer may be an extension of a next low coding layer. Pictures in higher coding layers may be predicted by pictures in one and/or more lower coding layers. In this regard, the VTU 110 may be operable to generate layered pictures in the base view video and the enhancement view video based on a tier system framework. The tier system framework comprises a plurality of tiers that are ordered hierarchically based on corresponding coding/decodability. Each picture in the base view video and the enhancement view video may belong to one of the tiers. For example, each tier may comprise pictures with same coding order. A tier may be indexed via a tier number, which may be determined based on the coding order of associated pictures. A picture with a particular tier number does not have to depend, whether directly or indirectly, on pictures with a higher tier number. A picture that depends on a reference picture may not have a tier number smaller than the tier number of the reference picture. The tier system framework conceptually parallels the inter-layer picture dependency and extends its flexibility without imposing encoding constraints. The flexible picture interdependencies of the tier system framework may be used to assist various applications such as, for example, personal video recording (PVR) applications in fulfilling trick modes.

The communication network 120 may comprise suitable logic, circuitry, interfaces and/or code that may be operable to provide platforms for communication between the VTU 110 and the VRU 130. The communication network 120 may be implemented as a wired or wireless communication network. The communication network 120 may be local area network, wide area network, the Internet, and the like.

The VRU 130 may comprise suitable logic, circuitry, interfaces and/or code that may be operable to receive a transport stream from the VTU 110 over the communication network 120. The received transport stream may comprise multiple video streams such as a base view video stream and an enhancement view video stream of a compressed 3D video. Pictures in the base view and the enhancement view may be generated based on a tier system framework. In this regard, pictures in the base view video and the enhancement view video may be decoded according to associated tiers. The VRU 130 may be operable to utilize context switching to support the tier system framework. For example, the VRU 130 may be operable to switch context among tiers of the tier system framework. The VRU 130 may be operable to pictures in a different way according to a corresponding context such like in the corresponding coding layer. The VRU 130 may be operable to utilize the inter-layer picture dependency in the tier system framework to select a subset or portion of pictures in the base view video and the enhancement view video of the compressed 3D video. The VRU 130 may be operable to decode the selected subset of pictures to enable trick mode operations, for example. Trick modes provide the capability of PVRs to render-video at speeds other than normal speeds and to play video backwards and/or forwards at various speeds. The trick modes may be implemented via various types of functionality such as, for example, pause, fast forward, rewind, skip ahead, and/or skip back functionality. The VRU 130 may be operable to provide users with the opportunity to enhance the control of their viewing experience via trick mode operations. Depending on the types of trick modes, the VRU 130 may be operable to select, for example, key pictures by skipping higher layer pictures to display the 3D video at a uniformly accelerated display rate. Examples of the VRU 130 may comprise, for example, set-top boxes, personal computers, and the like.

In an exemplary operation, the VTU 110 may be operable to acquire an uncompressed 3D video. The acquired uncompressed 3D video may comprise a left view video and a right view video. The VTU 110 may be operable to use MPEG-4 MVC standard to compress the acquired uncompressed 3D video into a base view video and an enhancement view video, each comprises a plurality of pictures in several coding layers such as a low coding layer, a middle coding layer and a high coding layer. Pictures in higher coding layers may be predicted or generated by adjacent pictures in lower coding layers based on a tier system framework. Pictures in the base view video and the enhancement view video may belong to corresponding tiers in the tier system framework and may be multiplexed into a single transport stream for transmission. The VRU 130 may be operable to decode pictures in the received base view and enhancement view videos, respectively. The VRU 130 may be context switched with respect to inter-layer picture dependency of the associated tier system framework. A subset or a portion of pictures in the base view video and the enhancement view video may be selected to be decoded for display to support trick mode for PVR applications.

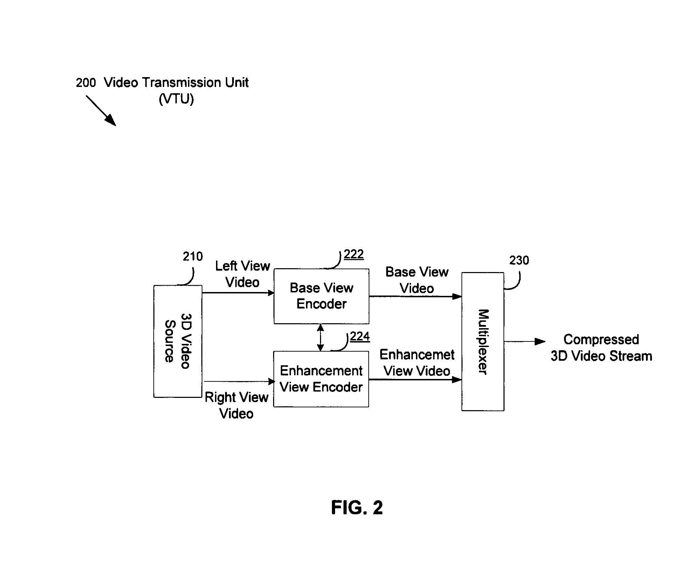

FIG. 2 is a diagram illustrating an exemplary video transmission unit that is operable to encode 3D video based on a tier system framework, in accordance with an embodiment of the invention. Referring to FIG. 2, there is shown a video transmission unit (VTU) 200. The VTU comprises a 3D video source 210, a base view encoder 222, an enhancement view encoder 224, and a multiplexer 230.

The 3D video source 210 may comprise suitable logic, circuitry, interfaces and/or code that may be operable to capture uncompressed 3D video contents. The captured uncompressed 3D video comprises a left view video and a right view video. The 3D video source 210 may be operable to communicate the captured uncompressed 3D video with a video encoder such as the base view encoder 222 and the enhancement view encoder 224 to be compressed into a base view and an enhancement view.

The base view encoder 222 may comprise suitable logic, circuitry, interfaces and/or code that may be operable to encode, for example, the left view video from the 3D video source 210 picture-by-picture into a base view stream. The base view encoder 222 may be operable to utilize various video compression algorithms such as specified in MPEG-4 Multi-view Video Coding (MVC), AVC, VC1, VP6, and/or other video formats to form compressed or coded pictures for the left view video from the 3D video source 210.

Pictures in the base view video may be generated in several coding layers such as a low coding layer, a middle coding layer and a high coding layer. Each coding layer may comprise a plurality of compressed pictures, which may be generated based on a tier system framework, which comprises a plurality of tiers ordered hierarchically based on corresponding decodability. Pictures with the same coding orders may be associated with the same tier number. Each generated picture in the base view video may belong to one of the tiers. Each tier may comprise a base view picture and an enhancement view picture in the same or different coding layer. A picture with a particular tier number may not reference directly or indirectly pictures with a higher tier number. A picture that depends on a reference picture may not have a tier number smaller than the tier number of the reference picture. In this regard, the base view encoder 222 may be operable to start generating the base view pictures from the low coding layer.

For each base view picture in the low coding layer, the base view encoder 222 may be operable to predict associated adjacent base view pictures across the entire coding layers before proceeding with predicting the next base view picture in the low coding layer. The base view encoder 222 may be operable to generate a base view reference picture in the low coding layer to predict a corresponding enhancement view picture and an adjacent base view picture in the same coding layer. An adjacent base view picture in the middle coding layer may be predicted from the generated base view reference picture and the predicted base view picture in the low coding layer. An adjacent base view picture in the high coding layer may be predicted from the generated base view reference picture and the predicted base view picture in the middle coding layer. The process may continue to predict the next base view picture in the low coding layer and associated adjacent base view pictures over the entire coding layers. Information such as the scene information from base view coding may be communicated with the enhancement view encoder 224 for enhancement view coding.

The enhancement view encoder 224 may comprise suitable logic, circuitry, interfaces and/or code that may be operable to encode, for example, the right view video from the 3D video source 210 picture-by-picture into an enhancement view stream. The enhancement view encoder 224 may be operable to utilize various video compression algorithms such as specified in MPEG-4 Multi-view Video Coding (MVC), AVC, VC1, VP6, and/or other video formats to form compressed or coded pictures for the right view video from the 3D video source 210. Similar to base view coding, pictures in the enhancement view video may be generated in several coding layers such as a low coding layer, a middle coding layer and a high coding layer. Each coding layer may comprise a plurality of compressed pictures, which may be generated based on a tier system framework.

The tier system framework may be formed by a plurality of tiers ordered hierarchically according to corresponding coding/decodability. Pictures with the same coding orders may be associated with the same tier number. Each generated picture in the enhancement view video may belong to one of the tiers. Each tier may comprise a base view picture and an enhancement view picture in the same or different coding layer. A picture with a particular tier number may not reference directly or indirectly pictures with a higher tier number. A picture that depends on a reference picture may not have a tier number smaller than the tier number of the reference picture. For example, the enhancement view encoder 224 may be operable to start with a current enhancement view picture in the low coding layer, which is predicted from the corresponding base view picture in the low coding layer. The current enhancement view picture in the low coding layer may be used to predict an adjacent enhancement view picture in the same coding layer. An adjacent enhancement view picture in the middle coding layer may be predicted from the current enhancement view picture and the predicted enhancement view picture in the low coding layer. An adjacent enhancement view picture in the high coding layer may be predicted from the current enhancement view picture and the predicted enhancement view picture in the middle coding layer. The process may continue to predict the next enhancement view picture in the low coding layer and associated adjacent enhancement view pictures over the entire coding layers. In addition, in each coding layer, an enhancement view picture may be also predicted from corresponding base view picture in the same coding layer.

The multiplexer 230 may comprise suitable logic, circuitry, interfaces and/or code that may be operable to merge compressed pictures in the base view and the enhancement view into a single transport stream (TS) for transmission.

In an exemplary operation, the 3D video source 210 may be operable to capture an uncompressed 3D video, which comprises a left view video and a right view video. The captured uncompressed 3D video may be compressed into a base view video and an enhancement view video. Pictures in the base view video and the enhancement view video may be generated in a low coding layer, a middle coding layer and a high coding layer, each comprising a plurality of compressed pictures. The base view encoder 212 and the enhancement view encoder 214 may be operable to generated pictures in the base view video and the enhancement view video based on a tier system framework. In this regard, the base view and enhancement view pictures may be generated starting from the low coding layer. For each pair of the base view picture and enhancement view pictures in the low coding layer, associated adjacent pictures may be predicted across the entire coding layers before proceeding with predicting the next base view and enhancement view pictures in the low coding layer. In addition, in each coding layer, an enhancement view picture may be predicted by correlating with corresponding base view picture in the same coding layer. The resulting base view and enhancement view pictures may be multiplexed via the multiplexer 230 into a single transport stream for transmission.

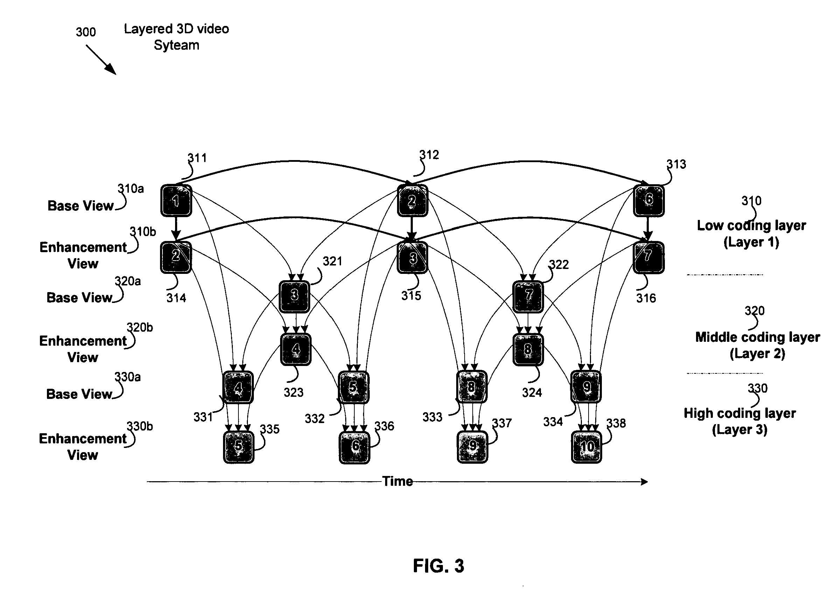

FIG. 3 is a diagram illustrating an exemplary compressed 3D video that is generated based on a tier system framework, in accordance with an embodiment of the invention. Referring to FIG. 3, there is shown a layered 3D video stream 300. The layered 3D video stream 300 comprises coding layers 310-330, which correspond to the low layer (layer 1), the middle layer (layer 2) and the high layer (layer 3), respectively. Two coding views are generated in each coding layer using MPEG-4 MVC standard, for example. A base view video 310a and an enhancement view video 310b are generated in the coding layer 310. Each view stream comprises a plurality of pictures, of which pictures 311-316, 321-324 and 331-338 are illustrated. Pictures in the layered 3D video stream 300 are generated or predicted based on a tier system framework. The tier system framework may be characterized by a plurality of tiers, which may be ordered hierarchically based on corresponding coding/decodability. Each tier comprises pictures with the same coding orders. Pictures in the same tier may from difference view videos and/or different coding layers. For example, in instances where the picture 312 in the base view 310a and the picture 314 in the enhancement view 310b both have the coding order of 2, accordingly, the picture 312 and the picture 314 may associate with a tier for the coding order of 2 within the tier system framework. Pictures such as the picture 315 in the low coding layer 310 and the picture 321 in the middle coding layer 320 both have the coding order of 3, accordingly, the picture 315 and the picture 321 may associate with a tier for the coding order of 3 within the tier system framework. A tier may be associated with a tier index number, namely, a tier number, which may be determined based on the coding order of associated pictures. Each tier may comprise a base view picture and an enhancement view picture in the same or different coding layer. Each picture in the layered 3D video stream 300 may belong to one of the tiers. A picture with a particular tier number may not reference directly or indirectly pictures with a higher tier number. A picture that depends on a reference picture may not have a tier number smaller than the tier number of the reference picture.

With regard to base view picture prediction, the prediction process may start with the base view picture 311 to predict the enhancement view picture 314 and the base view picture 312. Associated adjacent base view pictures such as the base view picture 321 in the middle coding layer 320 and the base view picture 331 in the high coding layer 330 may be predicted before predicting adjacent base view pictures associated with a next successive base view picture (the base view picture 312) in the low coding layer 310. Specifically, the base view picture 321 in the middle coding layer 320 may be predicted from the base view picture 311 and the base view picture 312. The base view picture 331 in the high coding layer 330 may be predicted from the base view picture 311 in the low coding layer 310 and the base view picture 321 in the middle coding layer 320. The prediction process may continue to predict adjacent base view pictures associated with a next successive base view picture, for example, the base view picture 312, in the low coding layer 310.

With regard to enhancement view picture prediction, the prediction process may start with the enhancement view picture 314 to an associated adjacent enhancement view picture such as the enhancement picture 315 in the low coding layer 310. Other associated adjacent enhancement view pictures such as the enhancement view picture 323 in the middle coding layer 320 and the enhancement view picture 335 in the high coding layer 330 may be predicted before predicting adjacent enhancement view pictures associated with a next successive enhancement view picture (the enhancement view picture 315) in the low coding layer 310. Specifically, the enhancement view picture 323 in the middle coding layer 320 may be predicted from the enhancement view picture 314 and the enhancement view picture 315. The enhancement view picture 335 in the high coding layer 330 may be predicted from the enhancement view picture 314 in the low coding layer 310 and the enhancement view picture 323 in the middle coding layer 320. The prediction process may continue to predict adjacent enhancement view pictures associated with a next successive enhancement view picture, for example, the enhancement view picture 315, in the low coding layer 310. In each coding layer, an enhancement view picture prediction may be based on corresponding base view picture in the same coding layer.

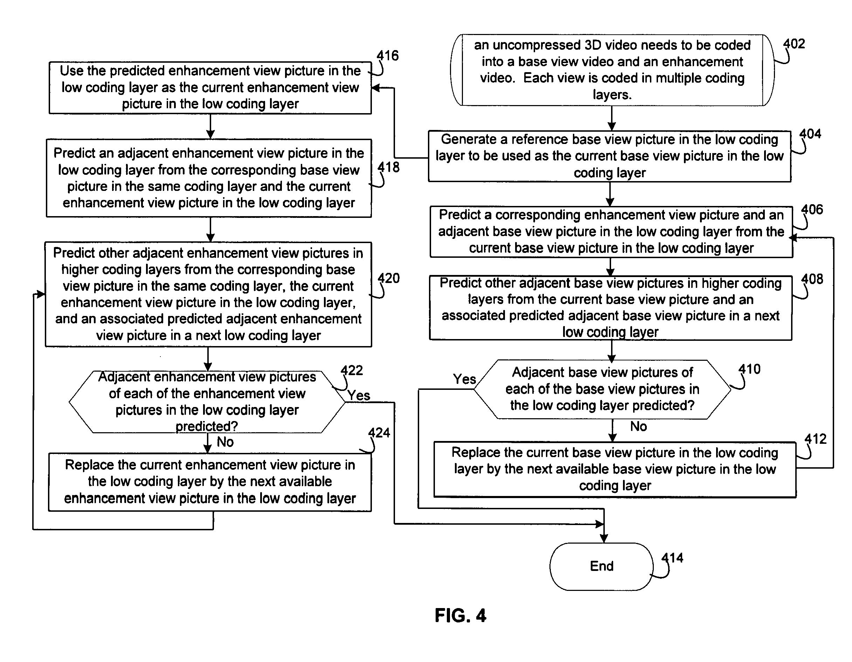

FIG. 4 is a flow chart illustrating exemplary steps that are utilized to compress a 3D video based on a tier system framework, in accordance with an embodiment of the invention. Referring to FIG. 4, the exemplary steps start with step 402, where an uncompressed 3D video may need to be coded into a base view video and an enhancement video. Each view may be coded in multiple coding layers (low, middle and high). In step 404, the base view encoder 222 may be operable to generate a reference base view picture in a low coding layer as the current base view picture in the low coding layer. In step 406, the current base view picture in the low coding layer may be used to predict a corresponding enhancement view picture and an adjacent base view picture in the low coding layer. In step 408, other associated adjacent base view pictures in higher coding layers may be predicted from the current base view picture and an associated predicted adjacent base view picture in a next low coding layer. For example, an adjacent base view picture in the middle coding layer 320 of the base view picture 311 in the low coding layer 310 may be predicted from the base view picture 311 and a predicted adjacent based view picture, for example, the base view picture 312, in the low coding layer 310. In step 410, it may be determined whether adjacent base view pictures of each of the base view pictures in the low coding layer may be predicted. In instances where it may be determined that adjacent base view pictures of each of the base view pictures in the low coding layer may not be predicted, then in step 412, the current base view picture in the low coding layer may be replaced by the next available base view picture in the low coding layer. The exemplary steps may return to step 406.

In step 410, instances where it may be determined that adjacent base view pictures of each of the base view pictures in the low coding layer may be predicted, then the exemplary steps may stop at step 414.

In step 416, the predicted enhancement view picture in the low coding layer may be used as the current enhancement view picture in the low coding layer. In step 418, an adjacent enhancement view picture in the low coding layer may be predicted from the corresponding base view picture and the current enhancement view picture in the low coding layer. In step 420, other adjacent enhancement view pictures in higher coding layers may be predicted from the corresponding base view picture in the same coding layer, the current enhancement view picture in the low coding layer, and an associated predicted adjacent enhancement view picture in a next low coding layer. In step 422, it may be determined whether adjacent enhancement view pictures of each of the enhancement view pictures in the low coding layer may be predicted. In instances where it may be determined that adjacent enhancement view pictures of each of the enhancement view pictures in the low coding layer may not be predicted, then in step 424, where the current enhancement view picture in the low coding layer may be replaced by the next available enhancement view picture in the low coding layer. The exemplary steps may return to step 420.

In step 422, in instances where it may be determined that adjacent enhancement view pictures of each of the enhancement view pictures in the low coding layer may be predicted, then the exemplary steps may stop at step 414.

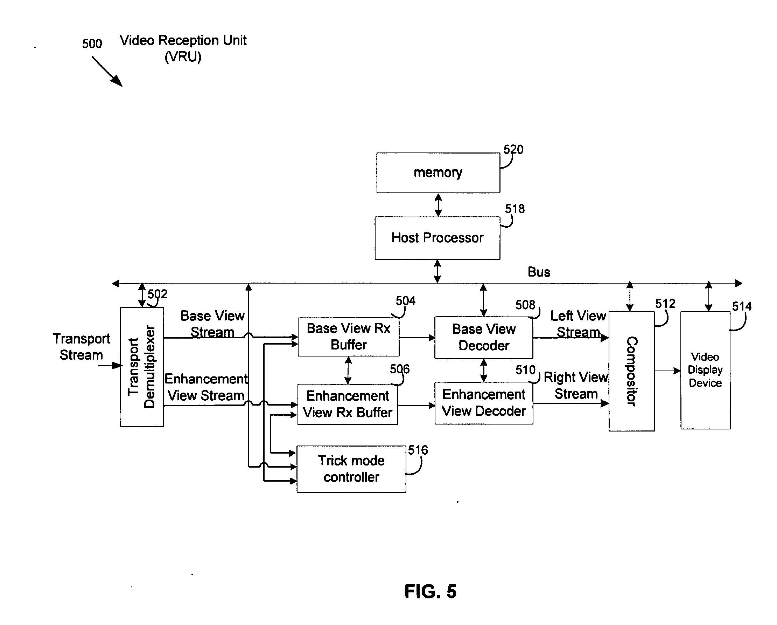

FIG. 5 is a diagram illustrating an exemplary video reception unit that is operable to utilize an inherent tier system framework of a compressed 3D video to support trick mode operations for a 3D video, in accordance with an embodiment of the invention. Referring to FIG. 5, there is shown a video reception unit (VRU) 500. The VRU 500 comprises a transport demultiplexer 502, a base view Rx buffer 504, an enhancement view Rx buffer 506, a base view decoder 508, an enhancement view decoder 510, a compositor 512, a video display device 514, a trick mode controller 516, a host processor 518 and a memory 520.

The transport demultiplexer 502 may comprise suitable logic, circuitry, interfaces and/or code that may be operable to demultiplex or parse a transport stream received from the VTU 110, for example. The received transport stream is a compound stream comprising a plurality of streams such as, for example, a base view stream and an enhancement view stream of a compressed 3D video. The transport demultiplexer 502 may be operable to extract the base view stream and the enhancement view stream from the received transport stream. Pictures of the extracted base view stream and the extracted enhancement view stream may be buffered in the base view Rx buffer 504 and the enhancement view Rx buffer 506, respectively for video decoding. In this regard, pictures in the extracted base view stream and the extracted enhancement view stream may be generated according to a tier system framework. The inherent inter-layer picture dependency may be used to select a subset of pictures in the extracted base view stream and/or the extracted enhancement view stream for video decoding so as to facilitate the operations of trick modes.

The base view Rx buffer 504 and the enhancement view Rx buffer 506 may comprise suitable logic, circuitry, interfaces and/or code that may be operable to buffer or store the extracted base view and enhancement view pictures, respectively. The base view Rx buffer 504 and the enhancement view Rx buffer 506 may be operable to selectively buffer pictures for video decoding. In this regard, the base view Rx buffer 504 and the enhancement view Rx buffer 506 may be managed via the trick mode controller 514 to buffer a selected subset of pictures for video decoding. The base view Rx buffer 504 and the enhancement view Rx buffer 506 may be operable to provide the buffered pictures to the base view decoder 508 and/or the enhancement view decoder 510, respectively, for video decoding.

The base view decoder 508 may comprise suitable logic, circuitry, interfaces and/or code that may be operable to decode pictures from the base view RX buffer 504. The base view decoder 508 may be operable to decode the pictures into, for example, a left view video. The base view decoder 508 may be operable to decode the pictures based on a specific coding order indicated in an associated tier system framework. The base view decoder 508 may be operable to decode pictures adaptively according to corresponding context information such as associated coding layers. The base view decoder 508 may be operable to utilize various video decompression algorithms such as specified in MPEG-4 MVC, AVC, VC1, VP6, and/or other video formats to form decompressed or decoded base view video contents. Information such as the scene information from base view decoding may be communicated with the enhancement view decoder 510 to be used for enhancement view decoding.

The enhancement view decoder 510 may comprise suitable logic, circuitry, interfaces and/or code that may be operable to decode pictures from the enhancement view RX buffer 506. The enhancement view decoder 510 may be operable to decode the pictures into, for example, a right view video. The enhancement view decoder 510 may be operable to decode the pictures based on a specific coding order indicated in an associated tier system framework. The enhancement view decoder 510 may be operable to decode pictures adaptively according to corresponding context information such as associated coding layers. The enhancement view decoder 510 may be operable to utilize various video decompression algorithms such as specified in MPEG-4 MVC, AVC, VC1, VP6, and/or other video formats to form decompressed or decoded enhancement view video contents.

The compositor 512 may comprise suitable logic, circuitry, interfaces and/or code that may be operable to combine the resulting left view and right view pictures into 3D pictures for display at an intended pace. The compositor 512 may be operable to present the 3D pictures to viewers in various types of trick modes such as, for example, pause, fast forward, rewind, skip ahead, and/or skip back via the video display device 514.

The video display device 514 may comprise suitable logic, circuitry, and/or code that may be operable to display 3D video pictures received from the compositor 512.

The trick mode controller 516 may comprise suitable logic, circuitry, and/or code that may be operable to select or identify a subset of pictures from the received base view stream and the enhancement view stream. The selected pictures may be stored in the base view Rx buffer 504 and/or the enhancement view Rx buffer 506 for video decoding to fulfill respective playback speeds, for example. In this regard, pictures in the received base view stream and the enhancement view stream may be selected according to an inherent tier system framework. The trick mode controller 516 may be operable to utilize the inherent inter-layer picture dependency to select a subset of pictures for video decoding. The trick mode controller 516 may be operable to determine a playback speed according to, for example, the types of trick modes, to facilitate efficient operation of trick modes. For example, for a fast-forward (FF) trick mode, the trick mode controller 516 may be operable to preferably select key pictures from the base view stream and the enhancement view stream to be decoded for display or presentation. The key pictures selected for trick modes may comprise, for example, I-pictures, P-pictures, and/or lower coding layer pictures.

The host processor 518 may comprise suitable logic, circuitry, interfaces and/or code that may be operable to manipulate and control operations of associated operation units such as, for example, the transport demultiplexer 502 and/or the trick mode controller 516, for example, to support various applications such as, for example, trick modes in a PVR system.

The memory 520 may comprise suitable logic, circuitry, interfaces and/or code that may be operable to store information such as executable instructions and data that may be utilized by the VRU 500. The executable instructions may comprise various image processing functions that may be utilized to process decoded video contents by the base view decoder 508 and the enhancement view decoder 510. The executable instructions may comprise picture selection algorithms that may be utilized by the trick mode controller 516 to support trick modes for a 3D video. The data may comprise received transport stream data and decoded video contents. The memory 520 may comprise RAM, ROM, low latency nonvolatile memory such as flash memory and/or other suitable electronic data storage.

In an exemplary operation, the VRU 500 may be operable to receive a transport stream via the transport demultiplexer 502 from the VTU 200. The transport demultiplexer 502 may be operable to demultiplex or parse the received transport stream into a base view stream and an enhancement view stream of a compressed 3D video. Pictures in the base view stream and the enhancement view stream may be buffered in the base view Rx buffer 504 and the enhancement view Rx buffer 506, respectively for video decoding. To facilitate the trick modes, pictures in the base view stream and the enhancement view stream may be selectively buffered in the base view Rx buffer 504 and the enhancement view Rx buffer 506, respectively. The trick mode controller 516 may be operable to select a subset of pictures from the received base view stream and the enhancement view stream. The selected pictures may be stored in the base view Rx buffer 504 and/or the enhancement view Rx buffer 506 for video decoding. Depending on the types of the trick modes such as a FF trick mode, the trick mode controller 516 may be operable to identify specific pictures such as key pictures from the base view stream and/or the enhancement view stream to facilitate efficient trick mode operation. The selected key pictures may comprise, for example, I-pictures, P-pictures, and/or lower coding layer pictures. In this regard, the base view decoding and the enhancement view decoding may be performed according to associated inherent tier system frame. The base view decoder 508 and/or the enhancement view decoder 510 may be adaptive to decode pictures according to associated context information such as associated coding layers. The selected pictures may be decoded into a left view video and a right view video of a 3D video. The resulting left and right view video may be combined via the compositor 512 to display to viewers via the video display device 514.

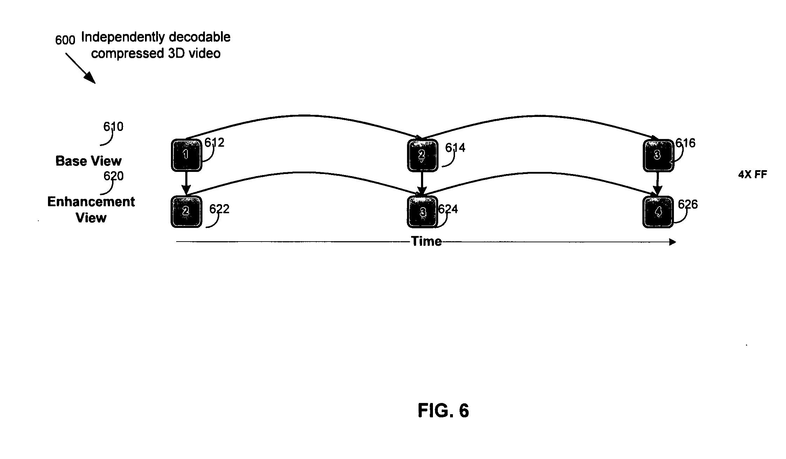

FIG. 6 is an independently decodable compressed 3D video that is generated based on a tier system framework to support a 4xFF trick mode, in accordance with an embodiment of the invention. Referring to FIG. 6, there is shown an independently decodable compressed 3D video 600. The independently decodable compressed 3D video 600 comprises a base view video 610 and an enhancement view video 620. The base view video 610 comprises a plurality of base view pictures, of which base view pictures 612-616 are illustrated. The enhancement view video 620 comprises a plurality of enhancement view pictures, of which enhancement view pictures 622-626 are displayed. Pictures in the independently decodable compressed 3D video 600 may be generated based on a tier system framework as described with respect to FIG. 3. Each tier comprises pictures with the same coding orders. For example, as illustrated in FIG. 6, the first tier may comprise the picture 612 alone. The pictures 614 and 622 may form the second tier. Depending on application, a portion of pictures in the independently decodable compressed 3D video 600 may be selected to fulfill respective playback speeds of trick modes. For example, a 4XFF trick mode may be achieved by selecting one out of four pictures in the independently decodable compressed 3D video 600 to be decoded for display to the viewers. In this regard, key pictures such as I-pictures, P-pictures, and/or base view pictures may be preferably selected to be decoded to enable trick modes.

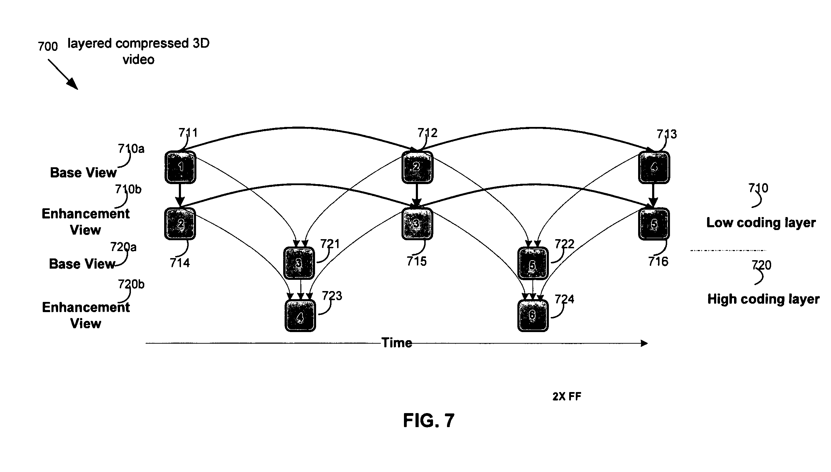

FIG. 7 is a layered compressed 3D video that is generated based on a tier system framework to support 2xFF trick mode, in accordance with an embodiment of the invention. Referring to FIG. 7, there is shown a layered compressed 3D video 700. The layered compressed 3D video 700 comprises a low coding layer 710 and a high coding layer 720. Two coding views are generated in each coding layer using MPEG-4 MVC standard. For example, a base view video stream 710a and an enhancement view video stream 710b are generated in the low coding layer 710. Each view stream comprises a plurality of pictures, of which pictures 711-716 and 721-724 are illustrated for the low coding layer 710 and the high coding layer 720, respectively. The base view video stream 710a may comprise various types of pictures such as, for example, an I-picture 711, P-pictures 712 and 713. The P-pictures 712 and 713 may be coded or predicted based on the I-picture 711. The enhancement view video stream 710b may comprise various types of pictures such as, for example, P-pictures 714-716. Pictures in the layered compressed 3D video 700 may be generated based on a tier system framework as described with respect to FIG. 3. Each tier comprises pictures with the same coding orders. For example, as illustrated in FIG. 7, the first tier may comprise the picture 711 alone. The pictures 712 and 714 may form the second tier. The pictures 715 and 721 may form the third tier and so on. Depending on application, a portion of pictures in the layered compressed 3D video 700 may be selected to fulfill respective playback speeds of trick modes. For example, a 2XFF trick mode may be achieved by selecting one out of two pictures in the layered compressed 3D video 700 to be decoded for display. In this regard, key pictures such as I-pictures, P-pictures, low coding layer pictures and/or base view pictures may be preferably selected to be decoded for support trick modes.

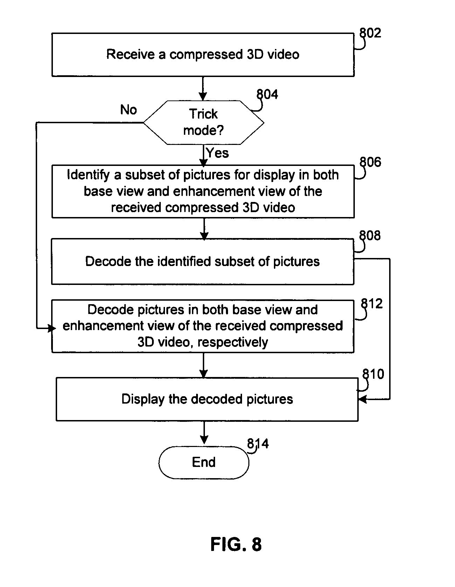

FIG. 8 is a flow chart illustrating exemplary steps that are utilized to present a 3D video in a trick mode, in accordance with an embodiment of the invention. Referring to FIG. 8, the exemplary steps start with step 802, where the VRU 500 may be operable to receive a compressed 3D video. Pictures in the received compressed 3D video may be generated based on a tier system framework as presented in FIG. 3. In step 804, it may be determined whether a trick mode is required. In instances where a trick mode is required, then in step 806, a portion or a subset of pictures in both base view and enhancement view of the received compressed 3D video may be identified or selected for display. In step 808, the identified portion or subset of pictures in the base view and the enhancement view may be decoded via the base view decoder 508 and/or the enhancement view decoder 510. In step 810, the VRU 500 may be operable to display the decoded pictures to the viewers on the video display device 514. The exemplary steps may end at step 814.

In step 804, in instances where a trick mode is not required, then in step 812, where pictures in the base view and enhancement view of the received compressed 3D video may be decoded via the base view decoder 508 and the enhancement view decoder 510, respectively. The exemplary steps may continue in step 810.

Aspects of a method and system for 3D video decoding using a tier system framework are provided. In accordance with various embodiments of the invention, the VRU 500 may be operable to receive a compressed 3D video from the VTU 200. The received compressed 3D video may be layered and predicted. A portion or a subset of pictures of the received compressed 3D video may be selected to be decoded to display to the viewers at an intended pace. The compressed 3D video may comprise a base view video and an enhancement view video, each comprising a plurality of layered pictures. The plurality of layered pictures in the base view video and the enhancement view video may be generated based on a tier system framework, as described with respect to FIG. 2 and FIG. 3, respectively. The tier system framework may comprise a plurality of tiers that are ordered hierarchically based on corresponding decidability. In this regard, each picture in the base view video and the enhancement view video may belong to one of the plurality of tiers. A picture in a particular tier of the plurality of tiers does not depend, whether directly or indirectly, on pictures in a higher tier. Each tier may comprise one or more pictures with same coding order. The VRU 500 may be operable to process such as decode the one or more pictures with same coding order in parallel. The VRU 500 may also be operable to decode the selected portion of pictures adaptively according to corresponding coding layer information. The pictures and the number of pictures to be selected may be determined the intended pace for display.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for a method and system for 3D video decoding using a tier system framework.

Accordingly, the present invention may be realized in hardware, software, or a combination thereof. The present invention may be realized in a centralized fashion in at least one computer system, or in a distributed fashion where different elements may be spread across several interconnected computer systems. Any kind of computer system or other apparatus adapted for carrying out the methods described herein may be suited. A typical combination of hardware and software may be a general-purpose computer system with a computer program that, when being loaded and executed, may control the computer system such that it carries out the methods described herein. The present invention may be realized in hardware that comprises a portion of an integrated circuit that also performs other functions.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for video coding, the method comprising:
performing by one or more processors and/or circuits in a video processing system:
selecting one or more pictures from a layered and predicted compressed three-dimensional (3D) video; and
decoding said selected one or more pictures for display at a particular display rate.

2. The method according to claim 1, wherein said layered and predicted compressed 3D video comprises a base view video and an enhancement view video, and each of said base view video and said enhancement view video comprises a plurality of layered pictures.

3. The method according to claim 2, wherein said plurality of layered pictures in said base view video and said enhancement view video are generated based on a tier system framework.

4. The method according to claim 3, wherein said tier system framework comprises a plurality of tiers that are ordered hierarchically based on corresponding decodability.

5. The method according to claim 4, wherein each of said plurality of layered picture in said base view video and said enhancement view video are associated with one of said plurality of tiers.

6. The method according to claim 4, wherein a picture in a particular tier of said plurality of tiers does not depend, whether directly or indirectly, on pictures in a higher tier of said plurality of tiers.

7. The method according to claim 4, wherein each of said plurality of tiers comprises one or more pictures with same coding order.

8. The method according to claim 7, comprising decoding said one or more pictures with same coding order in parallel.

9. The method according to claim 1, comprising adaptively decoding said selected pictures according to corresponding coding layers.

10. The method according to claim 1, comprising selecting said one or more pictures from said layered prediction compressed three-dimensional (3D) video based on said particular display rate.

11. A system for video coding, the system comprising:
one or more processors and/or circuits for use a video processing system, wherein said one or more processors and/or circuits are operable to:
select one or more pictures from a layered and predicted compressed three-dimensional (3D) video; and
decode said selected one or more pictures for display at a particular display rate.

12. The system according to claim 11, wherein said layered and predicted compressed 3D video comprises a base view video and an enhancement view video, and each of said base view video and said enhancement view video comprises a plurality of layered pictures.

13. The system according to claim 12, wherein said plurality of layered pictures in said base view video and said enhancement view video are generated based on a tier system framework.

14. The system according to claim 13, wherein said tier system framework comprises a plurality of tiers that are ordered hierarchically based on corresponding decodability.

15. The system according to claim 14, wherein each of said plurality of layered pictures in said base view video and said enhancement view video are associated with one of said plurality of tiers.
